# EUROPEAN PATENT SPECIFICATION

(11) **EP 0 738 287 B1**
(45) Date of publication and mention of the grant of the patent: **06.05.1998**
(21) Application number: 94902146.3
(22) Date of filing: 03.11.1993
(51) Int. Cl.: C08F 4/24, C08F 210/18

(54) **A METHOD FOR THE PREPARATION OF AN UNSATURATED ETHYLENE COPOLYMER**
EIN VERFAHREN ZUR HERSTELLUNG EINES UNGESÄTTIGTEN ETHYLEN COPOLYMERS
UN PROCEDE DE PREPARATION D'UN COPOLYMERE D'ETHYLENE

(30) Priority: 07.12.1992 SE 9203669
(43) Date of publication of application: 23.10.1996
(73) Proprietor: Borealis Holding A/S, DK-2800 Lyngby (DK)
(72) Inventor: GUSTAFSSON, Bill, S-444 41 Stenungsund (SE); THORN, Lars, S-442 41 Kungälv (SE); WAHLSTRÖM, Anders, S-444 31 Stenungsund (SE); PALMLÖF, Magnus, S-414 79 Göteborg (SE)
(74) Representative: Wiklund, Erik
(86) International application number: SE9300916
(87) International publication number: WO9413707

(56) References cited:
- EP-A- 0 008 528
- WO-A-91/17194
- DE-B- 2 014 172

## Description

This invention relates to a method for the preparation of an unsaturated ethylene copolymer. More specifically, the invention concerns the preparation of an unsaturated ethylene copolymer having an increased degree of unsaturation by coordination-catalysed polymerisation through a low-pressure process.

Normally, conventional polyethylene, which can be produced by radical polymerisation (also referred to as high-pressure polymerisation) or coordination-catalysed polymerisation (also referred to as low-pressure polymerisation), has a low degree of unsaturation. In many situations, it is desirable to produce polymers having a higher degree of unsaturation, which may serve as a seat for chemical reactions, such as the introduction of functional groups into the polymer molecule or the cross-linking of the polymer. Cross-linked structures may, for instance, be used for insulating-layer material, semiconductor-layer material or sheath material for electric cables, and hot-water pipes.

It is known that an increased level of double bonds can be obtained in polyethylene produced by organometallic catalysis, i.e. involving a coordination catalyst, by introducing as comomonomers compounds having several double bonds, of which only one is used for polymerising the comomoner into the polymer chain. Such prior-art techniques are described in e.g. EP 0 260 999, which relates to copolymers of ethylene and dienes having 4-18 carbon atoms, such as 1,4-hexadiene, in which case polymerisation is performed by means of a so-called metallocene catalyst at a high pressure. The catalyst metal is selected from the group IVB or VB in the periodic table. Another instance of the prior art is WO 91/17194, which concerns copolymers of α-olefins, such as ethylene, and α,ω-dienes having 7-30 carbon atoms, preferably 8-12 carbon atoms, such as 1,9-decadiene, in which case polymerisation is coordination-catalysed by means of a solid heterogenous coordination catalyst of Ziegler type (Ti). Moreover, US 3,357,961 discloses the production of a copolymer of ethylene and 1,5-hexadiene by coordination-catalysed low-pressure polymerisation. The catalyst consists of a mixture of an organoaluminium compound and a reducible, heavy transition metal halide, preferably Ti, Zr or V chloride. Further examples are given in JP 0 266 1809, which relates to coordination-catalysed copolymerisation of ethylene and an α,ω-diene by means of a nickel catalyst. Mention may further be made of Chemical Abstracts, Vol. 116, No. 4, 27 January 1992, p. 15, Abstract 21674b (JP 0 322 1508 published on 30 September 1991), Chemical Abstracts, Vol. 101, No. 12, 17 September 1984, p. 42, Abstract 92065e (JP 595 6412 published on 31 March 1984); and Chemical Abstracts, Vol. 69, No. 74, 9 December 1968, Kiti, Itsuo: "Ethylene-1,4-hexadiene copolymers", p. 9135, Abstract 97310m. These Abstracts relate to copolymers of ethylene and non-conjugated dienes, such as 1,4-hexadiene, 1,7-octadiene and 1,9-decadiene, and involve the use of coordination-catalysed polymerisation with catalysts of Ziegler type (Ti, V).

The above-mentioned instances of the prior art all relate to polymerisation involving coordination catalysts of Ziegler-Natta type, i.e. catalysts of the type indicated in e.g. the Encyclopedia of Polymer Science and Engineering, 2nd Ed., Vol. 17 (1989), pp 1027 and 1028. If there is no addition of any diene monomer, polymerisation involving a Ziegler-Natta catalyst normally results in an ethylene polymer having a degree of unsaturation of about 0.1 terminal vinyl groups per 1000 carbon atoms (about 0.05-0.12 terminal vinyl groups per 1000 C). This comparatively low degree of unsaturation means that, in the preparation of an ethylene polymer having an increased degree of unsaturation by means of a diene comonomer, a relatively large amount of the diene comonomer has to be added to achieve the desired degree of unsaturation of the resulting polymer.

Furthermore, mention may be made of EP 0 008 528, which relates to coordination-catalysed polymerisation of ethylene and up to 40% by weight of other α-olefin comonomers by means of a catalyst which consists of CrO₃ on a carrier of a refractory oxide. The catalyst is activated by heating and is modified by means of a modifying agent which consists of a trihydrocarbyl aluminium compound, such as triethyl aluminium, and an aliphatic α,ω-diene having at least 6 carbon atoms, such as 1,5-hexadiene or 1,7-octadiene. It should be observed that the diene serves to modify the catalyst and is not used as a monomer in the copolymerisation with ethylene. Moreover, it is a requirement that the catalyst be modified with the diene in combination with the trihydrocarbyl aluminium compound, i.e. the latter is a compulsory additive. The aim of the catalyst modification is to produce a polymer having a wide molecular weight distribution, and not a polymer having an increased degree of unsaturation.

This invention aims at obviating the drawbacks of the prior art and providing an ethylene polymer having an increased degree of unsaturation while using a smaller amount of the polyunsaturated comonomer. This advantage, as well as other advantages that will appear from the following description, is achieved by polymerisation performed by means of a chromium catalyst, more specifically a chromium catalyst based on chromium trioxide or chromate.

Thus, the invention provides a method for preparing an unsaturated ethylene polymer, wherein ethylene and at least one monomer which is copolymerisable with ethylene and includes a polyunsaturated comonomer, are polymerised by coordination-catalysed polymerisation with a coordination catalyst, said method being characterised in that polymerisation is performed at a polymerisation temperature of at most 120°C using a chromium catalyst which is based on chromium trioxide or chromate and is unmodified or modified by titanation or fluoridation, and a polyunsaturated comonomer having 8-14 carbon atoms and at least two non-conjugated double bonds, of which at least one is terminal, such that the ethylene polymer formed contains unsaturation from the polyunsaturated comonomer.

Further distinctive features of the invention will appear from the following description, as well as the appended claims.

Since the chromium catalysts used in the invention are previously known, no detailed description is called for here. For more detailed information, reference is made to M. P. McDaniel, Advances in Catalysis, Vol. 33 (1985), pp 47-98 and M. P. McDaniel, Ind. Eng. Chem. Res., Vol. 27 (1988), pp 1559-1569. Normally, the catalyst is supported by a carrier, preferably silica. The so-called Phillips catalyst, which is based on chromium trioxide on a silica carrier, is a chromimum catalyst suitably used in the invention. The Phillips catalyst is generally produced by activating silica together with a so-called masterbatch of chromium trioxide or chromic acetate. When chromic acetate is used, it is oxidised to chromium trioxide, so that the end product is the same no matter whether use is made of chromium trioxide or chromic acetate. The chromium trioxide forms volatile chromic acid, which is evenly distributed on the silica particles. The 6-valent chromium deposited on the silica particles should then be reduced in order to become catalytically active, and this happens when the chromium comes into contact with the ethylene in the polymerisation reactor.

Another type of chromium catalyst that can be used in the invention is the so-called chromate-type catalyst. When producing such a catalyst, a chromate compound, such as silyl chromate, is deposited cn an activated silica carrier, whereupon the deposited chromate is reduced by means of an alkoxide, such as an aluminium alkoxide, e.g. diethyl aluminium ethoxide.

The inventive chromium catalyst can be modified by titanation and fluoridation, which is in accordance with the prior art (see, for instance, the Preparation of Catalysts, V. G. Oncelet et al,. Elsevier Science Publishers, Amsterdam, 1991, pp 215-227, an article by C. E. Marsden).

It has surprisingly been found that, whereas the above-mentioned types of chromium catalysts, i.e. those based on chromium trioxide or chromate, are suited for use in the invention, other types of chromium catalysts, such as those based on chromocen on silica gel, are not suited for use in the invention. The reason for this is not absolutely clear, but it is assumed that a catalyst having organic unsaturated ligands bound directly the chromium atom is not effective in the invention.

The production of polyethylene by means of a chromium catalyst normally, i.e. when there is no addition of any polyunsaturated comonomer, results in an ethylene polymer having a degree of unsaturation of 0.30-0.75 terminal vinyl groups per 1000 C, on an average 0.5 terminal vinyl groups per 1000 C. This is a much higher value than that indicated above, i.e. 0.1 terminal vinyl groups per 1000 C, for a Ziegler-Natta catalyst. This higher "initial value" of the degree of unsaturation for a chromium catalyst means that the invention does not require the use of such a large amount of the polyunsaturated comonomer as when a Ziegler-Natta catalyst is used, in order to achieve the same degree of unsaturation of the resulting unsaturated ethylene polymer. In other words, the present invention makes it possible to obtain a higher degree of unsaturation of the ethylene polymer for the same amount of the polyunsaturated comonomer. Thus, the polyunsaturated comonomer is used more efficiently in the present invention. This is a considerable advantage, the polyunsaturated comonomers used being fairly expensive.

According to the invention, the polyunsaturated comonomer generally consists of monomers which are copolymerisable with ethylene and have 8-14 carbon atoms and at least two non-conjugated double bonds, of which at least one is terminal. The polyunsatured comonomer may have a branched or, which is preferred, a straight chain, and it may contain substituents that do not interfer with the polymerisation, but is preferably unsubstituted. Polyunsatured compounds having fewer than 8 carbon atoms, such as diene monomers having 6 carbon atoms, are not suited for use as comonomers in the invention. The reason for this is not absolutely clear, but it is assumed that it is due to a cyclisation of the diene. It may be mentioned that 1,5-hexadiene, on the other hand, is a satisfactory comonomer when using a Ziegler-Natta catalyst. Further, the present invention does not encompass polyunsaturated comonomers having more than 14 carbon atoms, since compounds having 15 carbon atoms and more are solid at room temperature and too high-boiling to be of use. According to the invention, the most preferred polyunsaturated comonomers are α,ω-alkadienes having 8-14 carbon atoms, more specifically unsubstituted straight-chain α,ω-alkadienes having 8-14 carbon atoms, and in particular 1,7-octadiene, 1,9-decadiene and 1,13-tetradecadiene.

The content of the polyunsaturated comonomer is such that the unsaturated polymer contains 0.05-10% by weight thereof, preferably 0.1-5% by weight, which in the case of 1,9-decadiene corresponds to a degree of unsaturation of, respectively, 0.05-10 and 0.1-5 double bonds per 1000 carbon atoms in addition to those formed in the termination reaction.

Apart from ethylene and at least one polyunsaturated comonomer, as indicated above, the ethylene polymer according to the invention may contain up to 40% by weight of some other monomer which is copolymerisable with ethylene. Such monomers are well-known to those skilled in the art and need not be accounted for in detail here. However, mention may be made of vinylically unsaturated monomers, such as C₃-C₈ α-olefins, e.g. propene and butene.

Especially butene has been found to have a surprisingly favourable effect in the invention, enabling improved properties of the ethylene polymer. The reason for this is not absolutely clear, but it is assumed, without preference to any specific theory, that the butene comonomer cooperates in synergistic fashion with the polyunsaturated comonomer and contributes to a more uniform distribution of the latter in the polymer molecule.

The polymerisation according to the invention may either be a gas-phase polymerisation or a slurry polymerisation. Both types are well-known and need not be accounted for in any great detail here. For more detailed information, reference is made to Low Pressure Manufacturing of Polyethylene, Nowlin T. E., Progr. Polym. Sci., 11 (1985), pp 29-55, and Polyolefin Resin Processes, Sitting M, 1961, Gulf Publ. Co., Houston Texas. In the invention, gas-phase polymerisation is preferred, having several advantages over slurry polymerisation, such as the lack of viscosity problems in the slurry or polymer solution at high molecular weights of the polymer, and the lack of any need to separate and clean solvents. The pressure in the polymerisation is not critical, but conveniently is 1-3 MPa, preferably 1.7-1.9 MPa. The temperature in the polymerisation lies within a fairly narrow range of 50-120°C, preferably 70-110°C. At higher temperatures, the polymerisation is interrupted, since the growing polymer chain is split off from the chromium complex and obtains a terminal double bond. When a chromium catalyst is used, the temperature thus is relied on for adjusting the average molecular weight of the polymer unlike what is the case for Ziegler-Natta catalysts, when hydrogen gas is used as a chain-transfer agent for adjusting molecular growth. The polymerisation reaction is carried out for a sufficient time to obtain the aimed-at monomer transformation, which usually involves an average residence time in the reactor of 5-10 h.

In view of the above-mentioned narrow temperature range with an upper limit of 120°C, preferably 110°C, it must be regarded as surprising that the invention enables the use of the polyunsaturated comonomers with 8-14 carbon atoms, such as 1,9-decadiene, which have a boiling point of 170°C and thus are liquid at the temperature prevailing in the polymerisation reactor. The fact that these high-boiling compounds actually act as comonomers in the invention is probably due to the chromium catalysts according to the invention having such a high monomer sensitivity that the vapour pressure generated by the polyunsaturated comonomer at the reactor temperature at issue is sufficient to supply the polymerisation reaction with the required amount of comonomer molecules.

The polymer obtained in the polymerisation reaction has an increased degree of unsaturation, which can be used for introducing functional groups into the polymer molecule, such as hydroxyl and carboxyl, by reacting it with compounds containing such functional groups. The ethylenic unsaturation may also, and perhaps primarily, be used for cross-linking the polymer. The cross-linking of polyethylene is desirable in many situations, such as in extrusion (e.g. of pipes, cable insulation or cable sheaths), blow moulding and rotational moulding. Cross-linking of the polymer can be performed by means of a cross-linking catalyst forming free radicals, preferably of peroxide type, such as dicumyl peroxide, or by means of activating radiation, such as beta radiation.

A much-improved peroxide response has been observed in the invention, i.e. the need of peroxide in the cross-linking of the ethylene polymer has been considerably reduced. This is an important advantage, not only because peroxide catalysts, such as dicumyl peroxide, are expensive, but also because they give rise to impurities having a distinctive smell or taste. Thus, the smaller the amount of peroxide catalyst used, the less expensive the process and the smaller the amount of smelling or tasting impurities generated, which is important e.g. in the cross-linking of water pipes of polyethylene polymer. Furthermore, peroxides are explosive as well as toxic. The improved peroxide response may also be used for increasing the speed of cross-linking for an unchanged amount of peroxide, instead of being used for reducing the amount of peroxide cross-linking catalyst added.

Also the increase in radiation response is of importance, meaning that a lower energy consumption is required for attaining a certain degree of cross-linking. Furthermore, the cross-linked material will taste and smell less, which is important e.g. in the cross-linking of water pipes of ethylene polymer.

Another important advantage of the invention is that it has surprisingly been found that the risk of undesirable premature cross-linking, commonly referred to as scorch, is considerably reduced. In the invention, the degree of unsaturation of the polymer is increased, resulting in a reduction of the amount of peroxide cross-linking catalyst needed, as mentioned above. On the whole, the increased degree of unsaturation of the polymer and the reduced amount of peroxide should have cancelled each other out as to the risk of scorch, i.e. the risk of premature cross-linking should have remained the same. That this is not so, is surprising as well as advantageous.

The cross-linking of polyethylene is of particular interest in the field of cable manufacture, which thus will be accounted for in some detail here. In the extrusion of e.g. a power cable, the metallic conductor generally is first coated with a semiconductor layer, then with an insulating layer, then with another semiconductor layer optionally followed by water barrier layers, and finally with a sheath layer.

At least the insulating layer and the outer semiconductor layer normally consist of cross-linked ethylene homopolymers and/or ethylene copolymers. Cross-linking substantially contributes to improve the temperature resistance of the cable, which will be subjected to considerable temperature stress when in operation. Cross-linking is brought about by adding free-radical-forming agents, mostly of peroxide type, to the polymer materials in the above layers prior to extrusion. The radical-forming agent should preferably remain stable during the extrusion but decompose in a subsequent vulcanisation step at an elevated temperature, thereby forming free radicals which are to initiate cross-linking. Premature cross-linking during extrusion will show as inhomogeneity and surface unevenness and possible discoloration in the different layers of the finished cable. Consequently, the polymer material and the radical-forming agent must not, in combination, be too reactive at the temperatures prevailing in the extruder (125-140°C).

After the extruder, the cable is passed through a long multi-zone vulcanising tube where cross-linking should take place as rapidly and completely as possible; initiated by the heat emitted in one or more heated zones of the vulcanising tube. A nitrogen-gas pressure is also applied in the tube, and contributes to prevent oxidation processes by keeping away the oxygen of the air and to reduce the formation of microcavities, so-called voids, in the polymer layers by reducing the expansion of the gases resulting from the decomposition of the radical-forming agent. It is desirable that cross-linking be rapid but require as little free-radical-forming agent as possible, since this reduces the risk of scorch in the extruder, results in minimum formation of microcavities, as mentioned above, and is economically advantageous, peroxide being an expensive additive.

It appears from the foregoing that the unsaturated ethylene copolymer according to the invention can be used as material for semiconductor layers, insulating layers and/or sheath layers of electric cables.

The following non-restricting embodiments and comparative Examples are meant to further elucidate the invention.

### Examples 1-9

Gas-phase polymerisation of ethylene by means of a chromium catalyst according to the invention was performed in a pilot reactor. The chromium catalyst consisted of CrO₃ on a carrier of Grace silica type 955 and had a chromium content of 0.1% by weight. The polymerisation in the reactor was carried out at a pressure of 17.5 bar gauge and at the temperatures indicated in Table 1. The polyunsaturated comonomer (diene) and the other comonomers, if any, appear from Table 1, and were added to the circulation-gas conduit of the polymerisation reactor at a site just before the reactor bed. The flow of diene added was measured and is indicated in Table 1. The production rate of the polymerisation in the Examples was 8-12 kg polymer/h. Ethylene and butene, when added as a comonomer, were continuously analysed by means of gas chromatography, and the volume ratio of butene to ethylene was determined and is indicated in Table 1. The resulting polymers were analysed for the degree of unsaturation by means of IR spectrometry, and for density, melt flow (MFR₂₁) and melt flow ratio (FRR 21/5), the values obtained being indicated in Table 1.

The melt flow was adjusted by raising or lowering the reaction temperature, a higher temperature giving a higher melt flow. It is desirable that the melt flow value be 10 g/10 min, too-low values resulting in a difficultly-processed polymer. Neither should the reactor temperature be raised too much, since this would involve a risk of the polymer sintering (150-120°C) or melting (125°C) in the reactor.

As appears from Table 1, a degree of unsaturation of 0.72-0.75 (comparative Examples 1 and 9) is obtained without the addition of any polyunsaturated comonomer (diene). It further appears from the comparative Examples 2 and 3 that the use of polyunsaturated comonomers outside the scope of the invention does not result in an increased degree of unsaturation but, on the contrary, gives a lower degree of unsaturation than when no polyunsaturated comonomer is added. On the other hand, the use of a polyunsaturated comonomer within the scope of the invention results in a polymer showing an increased degree of unsaturation of 1 or more (Examples 4-8). Especially good results as to the polymer properties are achieved if also butene is added as an additional comonomer (Examples 4-5). Example 10

The polymers produced in Examples 1, 4 and 5 were exposed to ionising radiation, and the radiation dose in kilogray (kGy) and the corresponding gel content (degree of cross-linking) were measured and are indicated in Fig. 1. As appears from the curves in Fig. 1, the polymers according to the invention (Examples 4 and 5) had a much higher radiation response than the polymer according to Example 1, i.e. a much lower radiation dose is needed for cross-linking the polymers according to the invention.

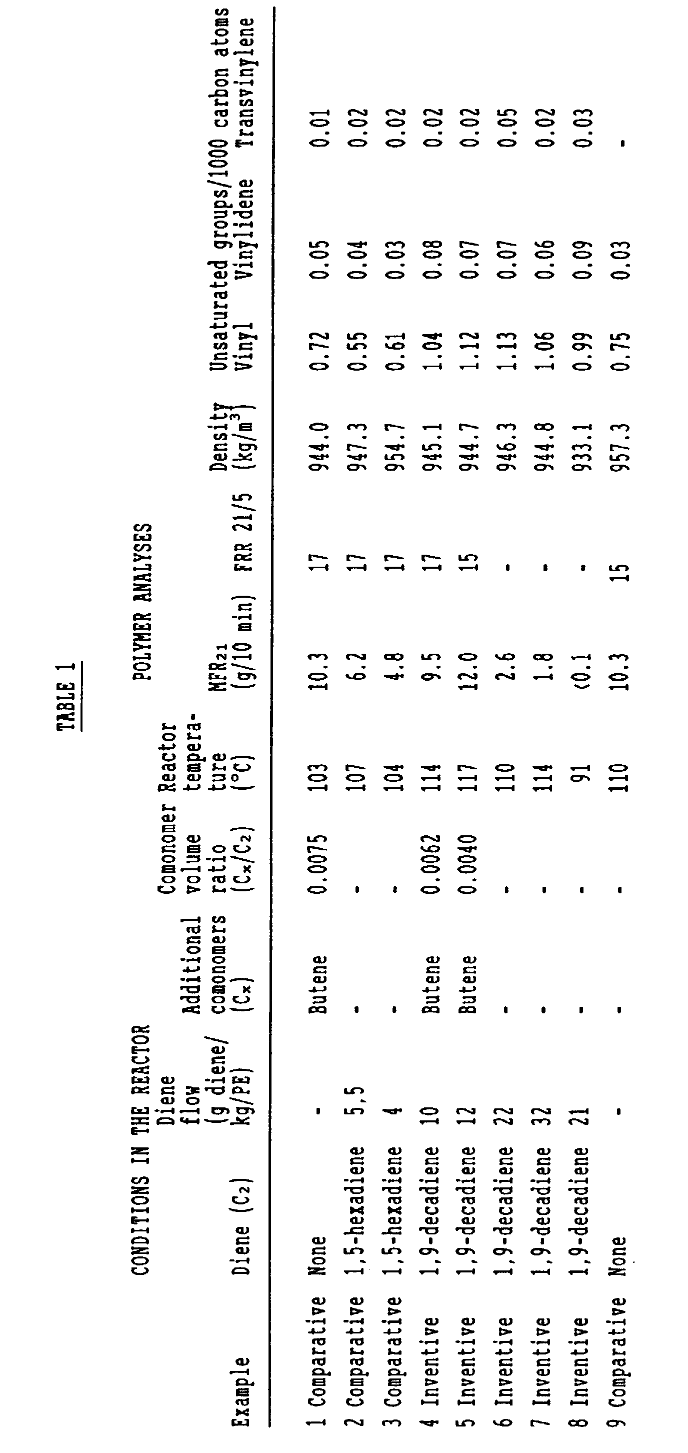

## Claims

1. A method for preparing an unsaturated ethylene polymer, wherein ethylene and at least one monomer which is copolymerisable with ethylene and includes a polyunsaturated comonomer are polymerised by coordination-catalysed polymerisation with a coordination catalyst, **characterised** in that polymerisation is performed at a polymerisation temperature of at most 120°C using a chromium catalyst which is based on chromium trioxide or chromate and is unmodified or modified by titanation or fluoridation, and a polyunsaturated comonomer having 8-14 carbon atoms and at least two non-conjugated double bonds, of which at least one is terminal, such that the ethylene polymer formed contains unsaturation from the polyunsaturated comonomer.

2. A method as set forth in claim 1, **characterised** in that the catalyst consists of chromium trioxide on a silica carrier.

3. A method as set forth in claim 1 or 2, **characterised** in that the polyunsaturated comonomer used is an α,ω-alkadiene, preferably 1,9-decadiene.

4. A method as set forth in any one of claims 1-3, **characterised** in that a terpolymer is produced by polymerisation of ethylene and two monomers copolymerisable therewith, of which one is the polyunsaturated comonomer and the other is a vinylically unsaturated monomer, preferably 1-butene.

## Patentansprüche

1. Verfahren zur Herstellung eines ungesättigten Ethylenpolymers, bei welchem Ethylen und wenigstens ein mit diesem copolymerisierbares Monomer, welches ein mehrfach ungesättigtes Comonomer enthält, durch eine Koordinationskatalyse-Polymerisation mit einem Koordinationskatalysator polymerisiert werden, dadurch gekennzeichnet, daß die Polymerisation unter Verwendung eines Chromkatalysators bei einer Polymerisationstemperatur von höchstens 120°C durchgeführt wird, der auf Chromtrioxid oder Chromat basiert und modifiziert oder nichtmodifiziert ist durch Titanation oder Fluoridierung, sowie eines mehrfach ungesättigten Comonomers mit 8-14 Kohlenstoffatomen und wenigstens zwei nichtkonjugierten Doppelbindungen, von denen wenigstens eine endständig ist, derart, daß das gebildte Ethylenpolymer Ungesättigtheit vom mehrfach ungesättigten Comonomer enthält.

2. Verfahren nach Anspruch 1, dadurch gekennzeichnet, daß der Katalysator aus Chromtrioxid auf einem Silikaträger besteht.

3. Verfahren nach Anspruch 1 oder 2, dadurch gekennzeichnet, daß das verwendete mehrfach ungesättigte Comonomer ein α, ω-Alkadien, vorzugsweise 1,9-Decadien, ist.

4. Verfahren nach einem der Ansprüche 1 bis 3, dadurch gekennzeichnet, daß ein Terpolymer hergestellt wird durch Polymerisierung von Ethylen und zwei damit copolymerisierbaren Monomeren, von denen eines ein mehrfach ungesättigtes Comonomer und das andere ein vinylisch ungesättigtes Monomer, vorzugsweise 1-Buten, ist.

## Revendications

1. Procédé de préparation d'un polymère de l'éthylène insaturé où l'éthylène et au moins un monomère qui est copolymérisable avec l'éthylène et qui comprend un comonomère polyinsaturé sont polymérisés par une polymérisation catalysée par coordination avec un catalyseur de coordination, caractérisé en ce que la polymérisation est accomplie à une température de polymérisation d'au plus 120°C au moyen d'un catalyseur à base de chrome qui est basé sur le trioxyde de chrome ou un chromate et qui n'est pas modifié ou qui est modifié par titanation ou fluoruration, et d'un comonomère polyinsaturé ayant 8-14 atomes de carbone et au moins deux doubles liaisons non conjuguées, dont l'une au moins est terminale, de sorte que le polymère de l'éthylène formé contient une insaturation provenant du comonomère polyinsaturé.

2. Procédé selon la revendication 1, caractérisé en ce que le catalyseur consiste en trioxyde de chrome sur un support de silice.

3. Procédé selon la revendication 1 ou 2, caractérisé en ce que le comonomère polyinsaturé utilisé est un α,ω-alcadiène, de préférence le déca-1,9-diène.

4. Procédé selon l'une quelconque des revendications 1 à 3, caractérisé en ce qu'un terpolymère est produit par polymérisation de l'éthylène et de deux monomères copolymérisables avec lui, dont l'un est le comonomère polyinsaturé et l'autre est un monomère vinyliquement insaturé, de préférence le but-1-ène.
